# EUROPEAN PATENT SPECIFICATION

(11) **EP 3 058 402 B1**
(45) Date of publication and mention of the grant of the patent: **15.04.2020**
(21) Application number: 14789942.1
(22) Date of filing: 09.10.2014
(51) Int. Cl.: G02B 6/12, G02B 6/122, G02B 6/125

(54) **OPTICAL POWER SPLITTER**
OPTISCHE LEISTUNGSTEILER
RÉPARTITEUR DE PUISSANCE OPTIQUE

(30) Priority: 14.10.2013 US 201314053135
(43) Date of publication of application: 24.08.2016
(73) Proprietor: Cisco Technology, Inc., San Jose, CA 95134 (US)
(72) Inventor: ANDERSON, Sean, San Jose, CA 95134 (US); TUMMIDI, Ravi Sekhar, San Jose, CA 95134 (US); WEBSTER, Mark, San Jose, CA 95134 (US)
(74) Representative: Roberts, Gwilym Vaughan
(86) International application number: PCT/US2014/059867
(87) International publication number: WO 2015/057484

(56) References cited:
- WO-A1-2014/150697
- JP-A- 2006 235 380
- US-A1- 2004 218 868
- US-A1- 2012 224 820

## Description

### TECHNICAL FIELD

Embodiments presented in this disclosure generally relate to optical power splitters (couplers), and more specifically, to optical power splitters (couplers) having an architecture which may be more reliably fabricated into useful devices.

### BACKGROUND

A fundamental component in waveguide optics is an optical splitter, commonly referred to as a Y-splitter, which divides the optical power in an input waveguide evenly between two separate output waveguides (or combines two outputs into a single waveguide in a coupler). Optical splitters are commonly used as 3-dB couplers in modulators. One example is the use of optical splitters in conjunction with Mach-Zehnder interferometers (MZIs). In MZI applications, typically two 3-dB splitters are used, one at the input side (splitting function) and one at the output side (combining function). The efficiency of the Y-splitter may affect the overall performance of the optical devices.

The document JP2006-235380 discloses an optical mode splitter constituted of an optical waveguide formed by embedding a core whose cross section is rectangle in a clad, and it has a main waveguide (core) capable of guiding two or more kinds of propagation modes with different propagation orders and a sub-waveguide having a tapered part and a curved waveguide in which waveguide width (core) gradually increases from nearly zero to predetermined width, and the tapered part is arranged with a fixed gap with the main waveguide.

The document WO 2014/150697 A1 is cited as prior art according to Art. 54(3) EPC.

An improved Y-splitter design would have less reliance on physical symmetry, and would be less sensitive to layer thickness and other types of fabrication variations.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Figure 1A is an isometric view illustrating an optical splitter according to one embodiment disclosed herein.
Figure 1B is a plan view of the embodiment disclosed in reference to Figure 1A.
Figures 1C-1E illustrate the cross sectional area of the waveguides of the embodiments of Figures 1A and 1B along the sectional lines shown in Figure 1B.
Figures 1F-1H illustrate the modal evolution behavior in the embodiment of Figures 1A-1E.
Figure 2 illustrates a plan view of an optical power splitter, according to one embodiment disclosed herein.
Figure 3 illustrates a plan view of an optical power splitter, according to one embodiment disclosed herein.
Figure 4 illustrates a plan view of an optical power splitter, according to one embodiment disclosed herein.
Figure 5A is a cross sectional view of an optical splitter, according to one embodiment disclosed herein.
Figure 5B is flow chart for manufacturing the optical splitter in Figure 5A, according to one embodiment disclosed herein.
Figure 6 is a cross sectional view of an optical splitter, according to one embodiment disclosed herein, showing a ribbed waveguide.

To facilitate understanding, identical reference numerals have been used, where possible, to designate identical elements that are common to the figures. It is contemplated that elements disclosed in one embodiment may be beneficially utilized on other embodiments without specific recitation.

### DESCRIPTION OF EXAMPLE EMBODIMENTS

### OVERVIEW

One embodiment of the present disclosure includes a device that splits a light beam into two separate paths, with reduced sensitivity to fabrication variation. The device includes an input waveguide and first and second output waveguides, where one output waveguide is a continuation of the input waveguide and the other output waveguide is spaced from the input waveguide and the other output waveguide. Each of the output waveguides includes a taper to transition a singly peaked dominant mode of light launched into the input waveguide into a doubly peaked mode, one single peak in each of the two output waveguides. The two output waveguides are not physically connected and thereby also provide electrical isolation from one another. The device operates as a 3-dB splitter (Y-splitter) that divides the input optical energy equally between two output waveguides. Similarly, the device may also function to combine two light beams into a single path (coupler).

Embodiments of the present disclosure allow optical energy in a waveguide to be split evenly between two separate output waveguides, or be combined from two separate output waveguides into a single waveguide. The design makes use of adiabatic mode evolution and does not require physical symmetry along the entire length of the device, and it thereby eliminates a major source of sensitivity to fabrication variation. Because embodiments make use of adiabatic mode evolution and do not rely on physical symmetry along the device length, the devices can have very low loss, low back reflection, a large operating bandwidth, and a high degree of tolerance to fabrication variation, in addition to providing electrical isolation between the output waveguides. Electrical isolation is a desirable feature when the device is used in an active device, such as a variable optical attenuator (VOA) or MZI.

The designs disclosed herein are applicable to any high-confinement or high index-contrast material system, including systems employing gallium nitride, silicon-based materials, such as silicon nitride, silicon oxy-nitride, single crystal silicon, polycrystalline silicon materials, or other III/N materials such as gallium arsenide, indium phosphide, or other related compounds. Generally, the index of the core (waveguide) material is much larger than that of the cladding. A index ratio of 2:1 or greater would be typical, but the design may still function even with lower ratios. The splitters/couplers can also be used in a cascade of devices to split or combine light into multiple outputs/inputs. For example, embodiments can include splitter trees in which a number of splitters are concatenated.

While the term "splitter" may be used throughout this disclosure in describing some embodiments, embodiments of the present disclosure can also be used in the opposite direction, to combine multiple light sources (coupler) in multiple waveguide paths into a single waveguide path. An example of this coupling application is at the output side of an MZI.

### EXAMPLE EMBODIMENTS

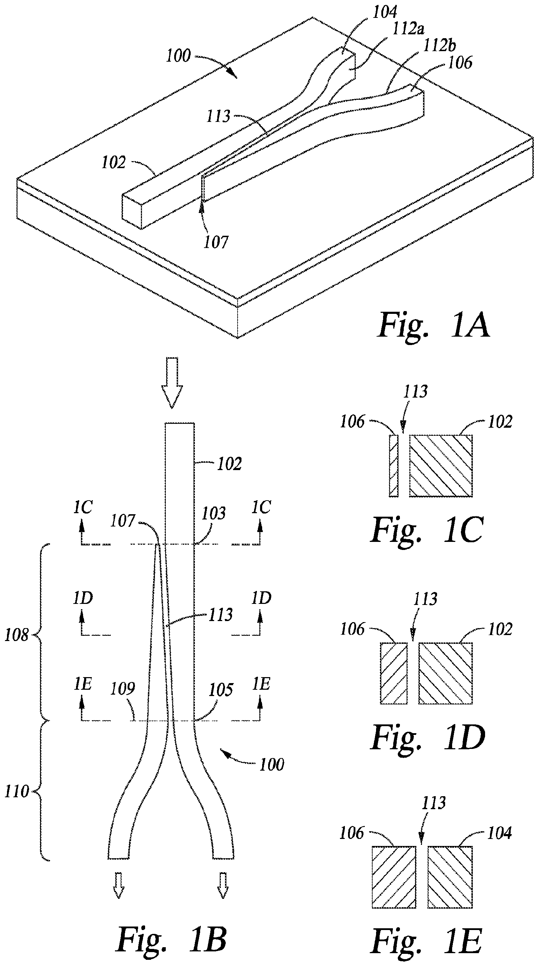

Figure 1A is an isometric view illustrating an optical splitter 100 according to one embodiment disclosed herein. Figure 1B is a plan view of the embodiment shown in Figure 1A. The optical splitter 100 of this embodiment will first be described in reference to these Figures in combination. The optical power splitter 100 includes input waveguide 102, a first output waveguide 104 continuously formed with the input waveguide 102 and a second output waveguide 106 spaced from input waveguide 102 and the first output waveguide 104. The optical power splitter includes a mode evolution region 108 and a separation region 110. The mode evolution region 108 is a region where in the input waveguide 102 , which continues as the first output waveguide 104, and the second output waveguide 106, transition to the separation region 110. The separation region 110 is the region in which the first and second output waveguides separate from each other and continue along a desired path.

The input waveguide 102 and the first and second output waveguides 104, 106 are designed to support at least a single mode. Each of the output waveguides 104, 106 includes a tapered section, which together define the mode evolution region 108. The first output waveguide 104 tapers in width from an input side 103 to an output side 105. Typical dimensions could be -500 nm width at the input side 103, -350 nm at the output side 105, and a taper length of about 30-50 microns over the mode evolution region 108. In another arrangement not forming part of the invention, however, the first output waveguide 104 may not taper between the input side 103 and the output side 105 but maintain a constant width in the region between these ends 103, 105. The second waveguide 106 is positioned in close proximity (typically -200 nm spacing or less) to the input waveguide 102 in the mode evolution region 108 and has a side facing surface generally parallel to, and spaced from, a side facing surface of the input waveguide 102 in the mode evolution region 108, and tapers outwardly, i.e., increases in width, in opposition to a corresponding reduction in width of the input waveguide 102 over the mode evolution region, changing in width from narrower to wider from its input side 107 to its output side 109. Typical dimensions of the second waveguide could be -250 nm width at its input side 107, -350 nm width at its output side 109, and a taper length equal to that of the first waveguide, about 30-50 microns over the mode evolution region 108. At the output sides 105, 109, the output waveguides 104, 106 are separated using dogleg or "s-shaped" bends 112a, 112b, for example. The dimensions provided herein are only exemplary and other dimensions would be evident to one of ordinary skill in the art.

A gap 113 is defined between the two output waveguides 104, 106 in the mode evolution region 108. The gap is preferably designed to facilitate transition of the dominant mode from the input waveguide into the second waveguide 106, while also facilitating continuation of the dominant mode in the first output waveguide 104. Other designs for Y-splitters, in contrast, rely on physical symmetry along the entire length of the device to achieve a 50/50 split in the power output to each of the branches. In high index-contrast optical platforms such as silicon photonics, reliance on the physical symmetry of diverging splitter waveguides leads to design tradeoffs as well as high sensitivity to fabrication variation. For example, changes in the width of one of the waveguides, even by a small amount, can lead to changes in the power output to the different branches in the optical splitter. Similarly, if the thickness of the material layer, in some applications silicon, changes, or if the index of the cladding changes, the power output to each of the branches of the optical splitter can be detrimentally affected. In addition, current fabrication techniques result in features which diffract or disperse light. These issues limit the performance of devices that require Y-splitters to operate.

Furthermore, in Y-branch power splitters that do not use the gap 113, as an optical signal propagates in an input waveguide towards the output waveguides, the sudden split of the single input waveguide into two output waveguides leads to back reflection and scattering of the light at the apex of the optical splitter. This results because a zero point apex cannot reliably or repeatedly be formed using known manufacturing techniques, i.e., a singularity or point cannot be formed in the silicon. Accordingly, the apex is a discontinuity or surface that scatters and/or reflects the light at that point.

Another example of a non-gap Y-splitter includes a single waveguide which is split into two waveguides through a graded split region. A graded split region is not compatible with CMOS fabrication due to fabrication constraints commonly used in the fabrication process. Conventional deposition and etching techniques are not suited to define a vertically graded structure which may require grey-scale lithography techniques.

Y-splitters that do not include the gap 113 rely on physical symmetry to allow light to pass from a single input channel into two branch channels. The symmetry is necessary because the output waveguides are physically in contact with the input waveguide. As a result, the output waveguides are not electrically isolated from one another. The lack of electrical isolation is not desirable for active devices, such as MZIs.

The gap 113 is defined in the fabrication process by etching through the layer which ultimately forms each of the waveguides. The horizontal taper is compatible with conventional deposition and etching techniques (e.g., CMOS fabrication). Current etching processes can be used to define a gap having a width of -200 nm. -500 to 200 nm spacing is believed to be sufficient to enable the features disclosed herein. However, the closer the spacing of the waveguides in the mode evolution region 108, the better the coupling between the first output waveguide 104 and the second output waveguide 106. Spacing of -50-150 nm between the two output waveguides 104, 106 in the mode evolution region should yield better coupling therebetween. While the gap 113 is shown to be symmetrical along its length, physical symmetry is not required. For example, the distance between the waveguides 104, 106 as defined by gap 113 may be uniform (i.e., constant) or non-uniform (i.e., vary) along the length of the gap 113. The gap 113 eliminates the discontinuity of the apex in the prior art designs and provides a structure which can be easily and repeatably fabricated using known techniques and design rule constraints. A cladding material can be deposited over the waveguides 102, 104, 106 and in the gap 113.

Figures 1C-1E are cross sectional views of the optical splitter 100 along the section lines shown in Figure 1B. Figure 1C illustrates the cross sections of the waveguides at the input sides 103, 107. Figure 1D illustrates the cross sections generally in the middle of the mode evolution region. Figure 1E illustrates the cross sections of the waveguides at the output sides 105, 109. The waveguides shown have an ideal quadrilateral shape but may have a trapezoidal shape or rounded corners due to fabrication constraints. At the input sides 103, 107, the first output waveguide 104 (the continuation of the input waveguide 102) has a larger cross sectional area than the second waveguide 106. In the middle region, the cross sectional area of the second waveguide increases and cross sectional area of the first output waveguide decreases. At the output sides 105, 109, the cross sectional areas of the two output waveguides 104, 106 are substantially the same. When the two waveguides approach an equal cross sectional area at the output sides 105, 109, the optical power splitting ratio is 50/50, making the device a 3-dB splitter. In practice, the exact split ratio will fall into a small range around 50/50 depending on the level of adiabaticity. For a device with taper lengths of -50 microns, the adiabaticity can be above 99.8%, which assures that the split ratio will be no worse than 55/45. A taper length of -50 microns also makes the split ratio resilient to changes in the device layer thickness (i.e., height) of as much as +/- 10 nm over -50 nm of bandwidth, or +/- 5 nm thickness variation over >100 nm of bandwidth. A wider bandwidth and tighter split ratio range can be achieved by increasing the taper length to attain a higher level of adiabaticity.

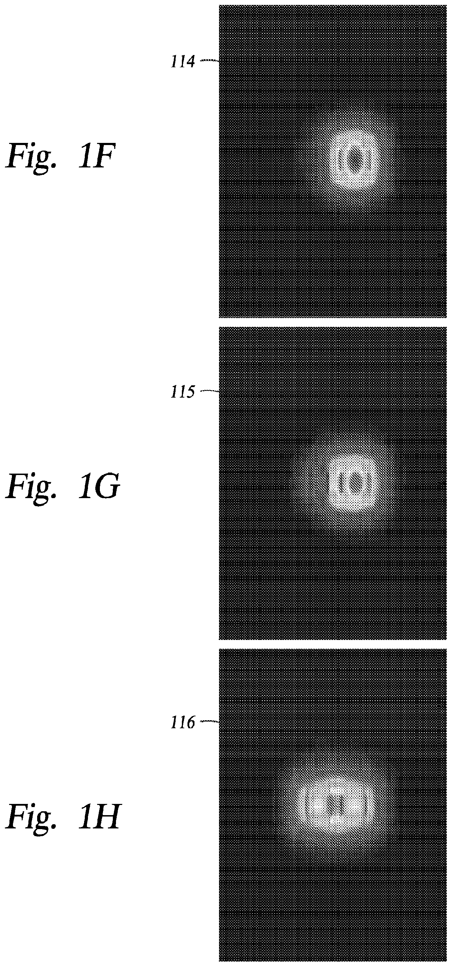

Figures 1F-H illustrate the modal evolution behavior from the input side to the output side of the optical splitter. The illustrations depict first-order TE (even) mode adiabatic modal evolution, in which the energy launched into the input waveguide constitutes the 'even' or fundamental mode. The optical energy remains in this mode and gradually and smoothly transforms from a singly-peaked mode 114 (shown in Figure 1F) at the input side 103 into a doubly-peaked mode 116 (shown in Figure 1H) at the output sides 105, 109, i.e., at the output side, the optical energy is effectively split for further transport through the output waveguides 104, 106. Figure 1G shows the transition from the single peak in the input into the double peak of the output. Each peak at the output side is ultimately confined to the two output waveguides 104, 106, respectively. As discussed herein, the amount of energy that is maintained in the fundamental mode is defined as the adiabaticity of the device. In order for the device to have a very high level of adiabaticity (as desired), the taper lengths should be large compared to the wavelength. In practice, a 50 micron length is sufficient for most applications. For example, a 30-50 micron taper length should be suitable for wavelengths in the range of 1.2-1.5 microns.

The adiabatic principle means the energy in the dominant mode will remain in the dominant mode when the shape of the wave guide cross-section changes slowly enough, independent of the cross-section geometry of the waveguide. If designed correctly, e.g., the transitional taper of the waveguide is gradual, the total energy in the dominant mode at the input should equal the total energy in the dominant mode at the outputs. Coupling of the energy into other modes is detrimental to optical device performance. One aspect of the present disclosure is to design in the adiabatic regime using a transitional taper, whether the taper is linear or some other curved shape such as exponential, logarithmic, or polynomial. The transitional length is in part determined by the shape of the taper which is used to achieve adiabatic regime.

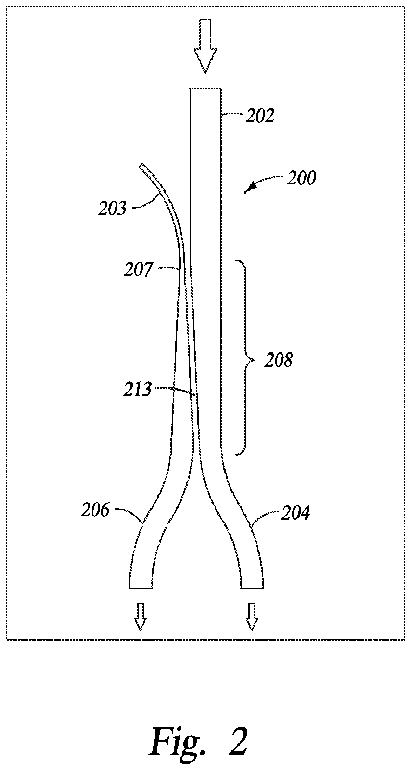

Figure 2 illustrates a plan view of an optical power splitter 200, according to another embodiment disclosed herein. Optionally, at the input side 207 of the second waveguide 206, a curved or angled section 203 may be added in order to produce a smooth transition at the input into the second waveguide 206. This smooth transition may be desirable if the second waveguide has greater than -100 nm width at its input end 107 (shown in Figure 1B), which may cause a discontinuity at the input and thus lead to excess optical loss at that point. Fabrication requirements may limit the minimum width of this end of the waveguide, and to ensure the optimal adiabatic design, the curved or angled section 203 may be added to minimize or eliminate the introduction of a discontinuity at the point of transition into the second output waveguide. As a result, the light input into the input waveguide 202 sees a smooth transition at the interface between the two output waveguides, namely the input side 207 of the second waveguide. The curved or angled section 203 narrows as it extends from the interface between the input waveguide 202 and the second output waveguide 206 in a direction away from the input waveguide 202. The curved or angled section 203 transitions the second waveguide 206 into the mode evolution region 208 where the tapered sections and the gap 213 facilitate adiabatic behavior during splitting of the light.

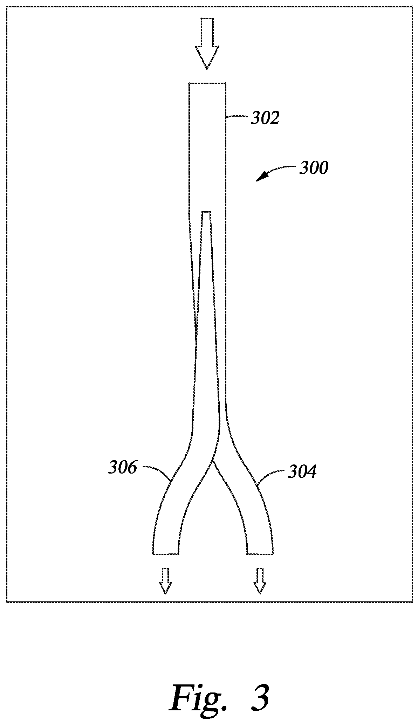

Figure 3 illustrates a plan view of an optical power splitter 300, according to another embodiment disclosed herein. This embodiment illustrates that the output waveguides 304, 306 do not need to be on the same surface or plane. In this embodiment, the input waveguide 302 and its output waveguide 304 are on a first or lower level and the second waveguide 306 is on a second (upper) level relative to a supporting substrate. The mode evolution region is oriented in a vertical dimension as opposed to a horizontal region as described above in reference to Figures 1 and 2. The geometry of the coupling design enables multi-level waveguide devices to be fabricated, allowing more devices to be formed on a single substrate or die. A cladding (or gap) material can be deposited between the two waveguides in region 305 to separate the two waveguides like the gap discussed above and in other embodiments described herein. Moreover, in another embodiment, the structure of splitter 300 may be reversed and the input waveguide 302 and its output waveguide 304 are on the second, upper level while the second waveguide 306 is on the first lower level relative to the substrate.

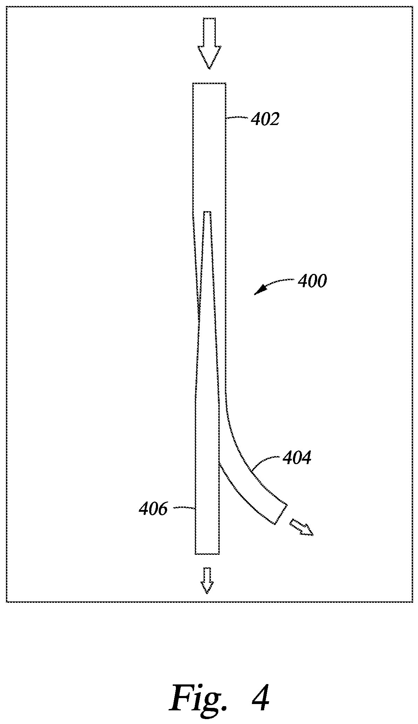

Figure 4 is a plan view of an optical power splitter 400 where the input waveguide 402 is physically and electrically separated from the output waveguide 404 using the gap material in region 405, according to another embodiment disclosed herein, illustrating that the outputs of the first and second output waveguides can extend in different directions. As is shown, input waveguide 402 continues as output waveguide 404 and bends after the mode evolution region and the separation region. Conversely, the second waveguide 406 continues straight along the direction of the input waveguide 402. Figure 4 is only exemplary of the angular configurations for the output waveguides. Flexibility of designs can be achieved with the splitter designs disclosed herein.

The cross sectional geometries of the waveguides contemplated herein can be any quadrilateral, such as rectangular or square, polygonal, trapezoidal or other suitable geometry to allow light to be transmitted. The waveguides can also be isolated within cladding or secondary materials. The waveguides can be slab waveguides or rib waveguides.

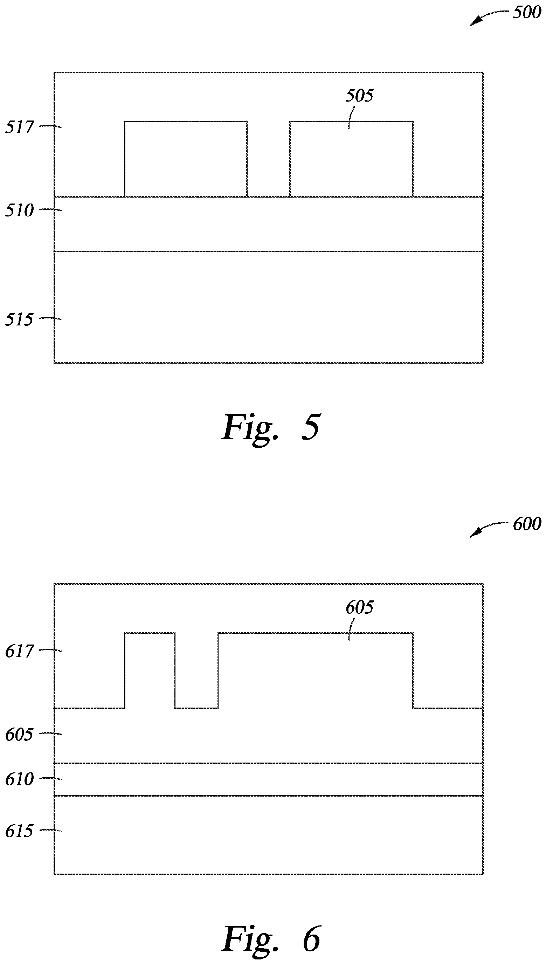

Figure 5A illustrates an exemplary waveguide in accordance with embodiments disclosed herein which will be used to generally illustrate the process steps listed in Figure 5B to fabricate devices disclosed herein. To form the optical splitter, at block 555 of method 550, an insulation layer 510 is formed on the surface of a substrate 515. For this example, the substrate 515 is a silicon substrate and the insulation layer 510 is silicon dioxide or silicon oxynitride. At block 560, a surface layer 505 is then formed over the insulation layer 510. The surface layer 505 in this example is silicon. The surface layer 505 is then patterned and etched at block 565 to form the waveguides in the surface layer 505. A cladding material 517 is then formed over the waveguides formed in the surface layer 505 at block 570. In this example, the cladding material 517 is silicon oxide or silicon oxynitride. The fabrication of the geometries of the waveguides and the gap therebetween takes advantage of conventional patterning and etching processes and does not require impractical device features to be formed. Because the waveguide structures are not dependent on precise manufacturing along the entire length of the devices and do not have critical interfaces such as the apex discussed above, the devices can be repeatably reproduced using current processing techniques.

If the waveguides are arranged vertically (as shown in Figure 3 and 4) rather than horizontally as shown here, a first waveguide may be patterned in the surface layer 505. After the cladding material 517 is formed over the first waveguide, a second surface layer is formed onto the cladding material and patterned into a second waveguide. In this example, the cladding material is formed to provide the desired separation (i.e., gap) between the first and second waveguides.

Although the embodiment described herein refers to the surface layer 505 and substrate 515 as silicon, the disclosure is not limited to such. For example, other semiconductors or optically transmissive materials may be used to form the structure 500 shown here. Moreover, the surface 505 and the substrate 515 may be made of the same material, but in other embodiments, these layers 505, 515 may be made from different materials.

The thickness of the surface layer 505 may range from less than 100 nanometers to greater than a micron. More specifically, the surface layer 505 may be between 100-300 nanometers thick. The thickness of the insulation layer 510 may vary depending on the desired application. The thickness of the insulation layer 510 may directly depend on the size of the mode being coupled to the (silicon-on-insulator) SOI device 500 and the desired efficiency. As such, the thickness of insulation layer 510 may range from less than one micron to tens of microns. The thickness of the substrate 515 may vary widely depending on the specific application of the SOI device 500. For example, the substrate 515 may be the thickness of a typical semiconductor wafer (*e.g.*, 100-700 microns) or may be thinned and mounted on another substrate.

For optical applications, the silicon surface layer 505 and insulation layer 510 (*e.g.*, silicon dioxide, silicon oxynitride, and the like) may provide contrasting refractive indexes that confine an optical signal in a waveguide in the surface layer 505. Because silicon has a higher refractive index compared to an insulator such as silicon dioxide, the optical signal remains primarily in the waveguide as it propagates across the surface layer 505 with a transition in the mode evolution region where part of the optical signal continues down the first output waveguide and a second part of the optical signal transitions into the second output waveguide.

Figure 6 is a cross sectional view of an optical splitter according to one embodiment disclosed herein showing a rib waveguide 600. The device is similar to the embodiment of Figure 5 except that the process does not require that the surface layer 605 be etched all the way down to the insulation layer 610. Rather, two rib waveguides are formed by etching only a portion of the surface layer 605 to define the waveguides therein, leaving a bulk layer therebelow, and thus, leaving the rib waveguides electrically connected.

### CONCLUSION

Generally, embodiments disclosed herein allow optical energy in a waveguide to be split evenly between two separate output waveguides. Because the architecture disclosed herein makes use of adiabatic mode evolution and does not rely on physical symmetry along the entire device length, the devices can have very low loss, low back reflection, a large operating bandwidth, and a high degree of tolerance to fabrication variation, in addition to providing electrical isolation between the output waveguides. Further, embodiments disclosed herein are able to maintain an even (3 dB) split even with variations in the silicon layer thickness, e.g., changes of +/-10% or greater, as well as over a wide bandwidth of 100 nm or larger. Still greater tolerance to variation can be achieved by using a longer taper length for the adiabatic region.

Other Y-splitter designs, which rely on mirror physical symmetry along their lengths, are highly susceptible to even small defects or dimensional variation that upset physical symmetry. Because any reliance on physical symmetry is limited to the output end at the point of separation, embodiments disclosed herein are significantly more stable in the presence of fabrication variation. In addition, the split ratio has a much weaker dependence on the symmetry at its output side than do symmetric Y-splitter designs. Compared to prior art symmetric Y-splitter designs, the present invention is believed to be 2 to 4 times less sensitive to asymmetry at the output side, which significantly increases robustness to fabrication variation. Conventional CMOS fabrication processes, such as are typically used for silicon photonics, have a width tolerance of +/- a few nanometers. A 5 nm asymmetry in the embodiments disclosed herein changes the split ratio to 55/45, whereas in a traditional symmetric Y-splitter, the split ratio would change to 60/40 or worse.

While the foregoing is directed to embodiments of the present invention, other and further embodiments of the invention may be devised without departing from the basic scope thereof, and the scope thereof is determined by the claims that follow.

## Claims

1. An apparatus, comprising:
a first waveguide (102, 104) having an input end, an output end and a tapered section;
a second waveguide (106) having an input end, an output end and a tapered section;
wherein the tapered sections of each of the first (102, 104) and second (106) waveguides are disposed adjacent to each other such that each of the tapered sections of the first (102, 104) and second (106) waveguides have a side face, the side faces of each of the first (102, 104) and second (106) waveguides being disposed in facing relation to one another and define a gap (113) therebetween, wherein the gap has a width of about 500 nm or less, the tapered sections defining a mode evolution region that distributes optical energy received at the input end of the first waveguide between the first (102, 104) and second (106) waveguides such that a first portion of the optical energy is output at the output end of the first waveguide 102, 104) and a second portion of the optical energy is output at the output end of the second waveguide (106),
wherein:
the first waveguide (102, 104) tapers from a first cross sectional area at an input side of the tapered section to a second cross sectional area at an output side of the tapered section, and the first cross sectional area is greater than the second cross sectional area; and
the second waveguide (106) tapers from a first cross sectional area at an input side of the tapered section to a second cross sectional area at an output side of the tapered section, and the first cross sectional area is smaller than the second cross sectional area.

2. The apparatus of claim 1, wherein the first and second waveguides comprise silicon.

3. The apparatus of claim 2, wherein the first and second waveguides are formed on a substrate.

4. The apparatus of claim 1, wherein the first and second waveguides are comprised of the same material.

5. The apparatus of claim 1, wherein a cladding material is deposited over the first and second waveguides.

6. The apparatus of claim 5, wherein the cladding material is selected from the group of gallium nitride, silicon dioxide, silicon nitride, silicon oxy-nitride, single crystal silicon, polycrystalline silicon materials, gallium arsenide, and indium phosphide.

7. The apparatus of claim 1, wherein the tapered sections of the first and second waveguides are linear tapers.

8. The apparatus of claim 1, wherein the tapered sections of the first and second waveguides are nonlinear tapers.

9. The apparatus of claim 1, wherein the second waveguide comprises a curved extension disposed on an input side thereof and extending away from the first waveguide.

## Patentansprüche

1. Vorrichtung, die aufweist:
einen ersten Wellenleiter (102, 104), der ein Eingangsende, ein Ausgangsende und einen verjüngten Abschnitt hat;
einen zweiten Wellenleiter (106), der ein Eingangsende, ein Ausgangsende und einen verjüngten Abschnitt hat;
wobei die verjüngten Abschnitte jedes des ersten (102, 104) und des zweiten (106) Wellenleiters benachbart zueinander angeordnet sind, so dass jeder der verjüngten Abschnitte des ersten (102, 104) und des zweiten (106) Wellenleiters eine Seitenfläche hat, wobei die Seitenflächen jedes des ersten (102, 104) und des zweiten (106) Wellenleiters einander zugewandt angeordnet sind und zwischen sich einen Spalt (113) ausbilden, wobei der Spalt eine Breite von ungefähr 500 nm oder weniger hat, wobei die verjüngten Abschnitte einen Modenevolutionsbereich bilden, der optische Energie, die an dem Eingangsende des ersten Wellenleiters empfangen wird, zwischen dem ersten (102, 104) und dem zweiten (106) Wellenleiter derart verteilt, dass ein erster Teil der optischen Energie an dem Ausgangsende des ersten Wellenleiters (102, 104) ausgegeben wird und ein zweiter Teil der optischen Energie an dem Ausgangsende des zweiten Wellenleiters (106) ausgegeben wird, wobei:
sich der erste Wellenleiter (102, 104) von einem ersten Querschnittsbereich an einer Eingangsseite des verjüngten Abschnitts zu einem zweiten Querschnittsbereich an einer Ausgangsseite des verjüngten Abschnitts verjüngt, und der erste Querschnittsbereich größer ist als der zweite Querschnittsbereich; und
sich der zweite Wellenleiter (106) von einem ersten Querschnittsbereich an einer Eingangsseite des verjüngten Abschnitts zu einem zweiten Querschnittsbereich an einer Ausgangsseite des verjüngten Abschnitts verjüngt, und der erste Querschnittsbereich kleiner ist als der zweite Querschnittsbereich.

2. Vorrichtung nach Anspruch 1, wobei die ersten und zweiten Wellenleiter Silizium aufweisen.

3. Vorrichtung nach Anspruch 2, wobei die ersten und zweiten Wellenleiter auf einem Substrat ausgebildet sind.

4. Vorrichtung nach Anspruch 1, wobei die ersten und zweiten Wellenleiter aus demselben Material bestehen.

5. Vorrichtung nach Anspruch 1, wobei ein Verkleidungsmaterial über den ersten und zweiten Wellenleitern aufgebracht ist.

6. Vorrichtung nach Anspruch 5,wobei das Verkleidungsmaterial ausgewählt wird aus der Gruppe von Galliumnitrid, Siliziumdioxid, Siliziumnitrid, Siliziumoxinitrid, einkristallinem Silizium, polykristallinen Siliziummaterialien, Galliumarsenid und Indiumphosphid.

7. Vorrichtung nach Anspruch 1, wobei die verjüngten Abschnitte der ersten und zweiten Wellenleiter lineare Verjüngungen sind.

8. Vorrichtung nach Anspruch 1, wobei die verjüngten Abschnitte der ersten und zweiten Wellenleiter nicht-lineare Verjüngungen sind.

9. Vorrichtung nach Anspruch 1, wobei der zweite Wellenleiter eine gebogene Verlängerung aufweist, die sich an einer Innenseite davon befindet und sich von dem ersten Wellenleiter weg erstreckt.

## Revendications

1. Appareil, comprenant :
un premier guide d'ondes (102, 104) ayant une extrémité d'entrée, une extrémité de sortie et une section tronconique ;
un second guide d'ondes (106) ayant une extrémité d'entrée, une extrémité de sortie et une section tronconique ;
dans lequel les sections tronconiques de chacune des premier (102, 104) et second (106) guides d'ondes sont disposées adjacentes l'une à l'autre de sorte que chacune des sections tronconiques des premier (102, 104) et second (106) guides d'ondes ont une face latérale, les faces latérales de chacun des premier (102, 104) et second (106) guides d'ondes étant disposées dans une relation de face-à-face l'une par rapport à l'autre et définissent un espacement (113) entre ces dernières, dans lequel l'espacement a une largeur d'environ 500 nm ou moins, les sections tronconiques définissant une région d'évolution de mode qui répartit de l'énergie optique reçue au niveau de l'extrémité d'entrée du premier guide d'ondes entre les premier (102, 104) et second (106) guides d'ondes de sorte qu'une première portion de l'énergie optique est sortie au niveau de l'extrémité de sortie du premier guide d'ondes (102, 104) et une seconde portion de l'énergie optique est sortie au niveau de l'extrémité de sortie du second guide d'ondes (106),
dans lequel :
le premier guide d'ondes (102, 104) va en s'amincissant à partir d'une première zone en coupe transversale au niveau d'un côté entrée de la section tronconique jusqu'à une seconde zone en coupe transversale au niveau d'un côté sortie de la section tronconique, et la première zone en coupe transversale est plus grande que la seconde zone en coupe transversale ; et
le second guide d'ondes (106) va en s'amincissant à partir d'une première zone en coupe transversale au niveau d'un côté entrée de la section tronconique jusqu'à une seconde zone en coupe transversale au niveau d'un côté sortie de la section tronconique, et la première zone en coupe transversale est plus petite que la seconde zone en coupe transversale.

2. Appareil selon la revendication 1, dans lequel les premier et second guides d'ondes comprennent du silicium.

3. Appareil selon la revendication 2, dans lequel les premier et second guides d'ondes sont formés sur un substrat.

4. Appareil selon la revendication 1, dans lequel les premier et second guides d'ondes sont composés de la même matière.

5. Appareil selon la revendication 1, dans lequel une matière de placage est déposée sur les premier et second guides d'ondes.

6. Appareil selon la revendication 5, dans lequel la matière de placage est sélectionnée dans le groupe constitué de nitrure de gallium, de dioxyde de silicium, de nitrure de silicium, d'oxynitrure de silicium, de silicium monocristallin, de matières de silicium polycristallin, d'arséniure de gallium et de phosphure d'indium.

7. Appareil selon la revendication 1, dans lequel les sections tronconiques des premier et second guides d'ondes sont des effilements linéaires.

8. Appareil selon la revendication 1, dans lequel les sections tronconiques des premier et second guides d'ondes sont des effilements non linéaires.

9. Appareil selon la revendication 1, dans lequel le second guide d'ondes comprend une extension incurvée disposée sur un côté entrée de celui-ci et s'étendant à l'écart du premier guide d'ondes.
